# EUROPEAN PATENT APPLICATION

(11) **EP 0 619 937 A1**
(43) Date of publication of application: **19.10.1994**
(21) Application number: 94105913.1
(22) Date of filing: 15.04.1994
(51) Int. Cl.: A01B 39/18, A01B 69/06, A01B 63/32

(54) **Precision weeding machine for row crops**

(30) Priority: 16.04.1993 US 46574
(71) Applicant: Desmarais, Robert, Acton Vale, Quebec J0H 1A0 (CA)
(72) Inventor: Desmarais, Robert, Acton Vale, Quebec J0H 1A0 (CA)
(74) Representative: Bonnetat, Christian

(57) **Abstract**

The machine includes a frame (2) adapted to move along spaced ridges (C) planted with crop plants (B), frame support runners engaging the furrows (D) between the ridges (C), transverse rows of weeding implements carried by the frame (2) for vertical movement from an inoperative to an operative position also transversely displaceable relative to the frame in opposite directions to closely run along the ridges (C) and furrows (D). The actuating rams (42,66) are controlled by an operator supported by the frame (2) in a position to have a direct view of the weeding implements. These weeding implements can be earth working discs (16) for mechanically loosening the earth and uprooting the weeds and for earth refilling. The distance between the implements can be adjusted in accordance with the distance between the ridges (C).

## Description

### FIELD OF THE INVENTION

The present invention relates to agricultural machines and, more particularly, to a machines for working row crops such as weeding.

### BACKGROUND OF THE INVENTION

In row crop cultivation, it is necessary to remove weeds on each side of and as close as possible to the crop plants. Known weeding machines use a guidance system, for instance runners, running in a ground trace, for instance in a furrow, for laterally guiding the earth working implements. Such known guidance systems are often not precise enough, for instance in the case of carrots cultivation wherein it is necessary to weed lateral zones which are very close to the planted carrots otherwise the weeds will overwhelm the young plants.

### OBJECTS OF THE INVENTION

It is therefore the general object of the present invention to provide an agricultural machine for row crop cultivation having means for treating the earth at a very close distance to the planted crops for effecting, for instance, precision weeding and earth refilling.

Another object of the present invention is to provide a machine with precision guidance as above described which is particularly adapted for crops planted on equally spaced ridges with intervening furrows and in which the distance between the ridges may vary.

### SUMMARY OF THE INVENTION

The row crop machine of the invention includes a frame which may be self propelled or hitched to a farm tractor for movement in a longitudinal direction, earth engaging means depending from the frame and preventing movement of the frame transversely of said longitudinal direction, at least one transverse row of earth working implements carried by the frame for movement in said longitudinal direction and also transversely displaceable relative to the frame in opposite transverse directions and actuator means reacting on the frame and acting on the implements to move the row of implements in either one of said transverse directions. The actuator means are under the control of an operator who has a direct vision of the ground and, consequently of the crop plants. The actuator means could also be under the control of a conventional guidance system. Therefore, the working implements can be laterally adjusted as the machine moves along so as to treat or work the soil very close to the crop plants during weeding. The earth engaging means are preferably tire wheels carried by the frame and which are used for guiding the machine along ground traces such as furrows.

Additional actuator means, which serve to raise and lower the implements, are also controlled by the operator.

Means are preferably provided to adjust the distance between the implements of any one row.

The earth working implements are preferably in the form of inclined discs arranged in at least two rows, the discs of one row being inclined in opposite direction with respect to the disc of the other row, the stroke of the transverse movements of the rows of disc being at least equal to half the distance between two adjacent implements so that the transverse position of the discs of the two rows may be reversed to either effect weeding by earth removing along each side of the plants or effect earth refilling of the ridges on each side of the plants. A third row of discs is preferably added for earth refilling.

In the drawings:
Figure 1 is a side elevation of the machine;
Figure 2 is a top plan view of the same;
Figure 3 is a partial perspective view;
Figure 4 is a partial cross-section taken on line 4-4 of Figure 3;
Figure 5 is a side elevation of the bottom portion which is cut out in Figure 4; and
Figure 6 is an enlarged view of the implement pushing spring.

### DETAILED DESCRIPTION OF THE PREFERRED EMBODIMENT

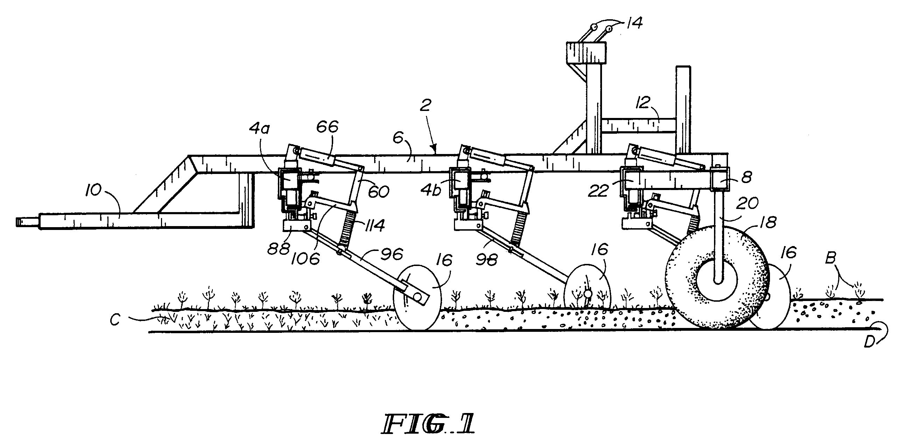

Referring to Figures 1, 2, and 3, there is shown the preferred embodiment of the invention which comprises a frame 2 formed of three transverse tubular beams 4a, 4b, 4c, a central longitudinal, tubular beam 6 and a rear transverse tubular beam 8, all welded to one another. Frame 2 has at its front a hitching bar 10 adapted to be hitched to, for instance, a farm tractor (not shown) for pulling of the machine while allowing pivotal movement in all planes. The back of frame 2 defines an operator's station 12 who may be standing or seated and who has access to the hydraulic control levers 14 for raising and lowering the soil working implements 16 and for laterally displacing them in either direction while having a direct view on the crop plants B planted in, generally, equally spaced rows on ridges C formed in the soil and separated by intervening furrows D.

Frame 2 generally extends transversely of several ridges C. The frame 2 is supported on the ground by two laterally spaced idle wheels 18 engaging and guided within spaced furrows D.

Wheels 18 are carried by struts 20 depending from rear beam 8 and fixed thereto. Inclined braces 22 join the outer ends of rear beam 8 to those of the next beam 4c.

Tire wheels 18 follow a trace at the bottom of the furrows D so as to guide the machine in the same path as that effected by another machine when the seeding operation was effected. Wheels 18 positively guide the frame 2 against lateral displacement.

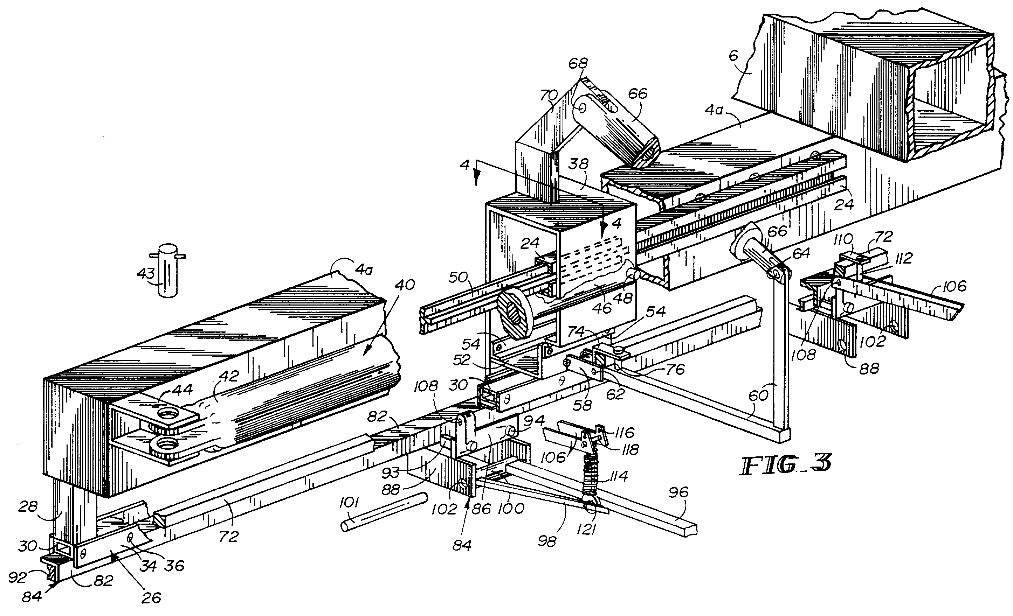

The mechanism for lowering and raising the work implements 16 and for displacing the same transversely of frame 2 is more particularly illustrated in Figures 3 to 6. These figures show the mechanism as mounted on the front transverse beam 4a but similar mechanisms are used for the transverse beams 4b and 4c.

An upper horizontal guide rail 24 of C-shape cross-section is secured to the rear side of transverse beam 4a. A lower horizontal guide rail 26 extends underneath transverse beam 4a, is parallel thereto, co-extensive therewith and is secured at its ends to the ends of beam 4a by means of vertical studs 28, as shown in Figure 3.

Lower guide rail 26 is composed of three parts which are secured together, namely: a tube 30 of rectangular cross-section, an L-shape member 32 and a retaining strip 34 which are fixed together by bolts 36.

A carriage 38 spacedly surrounds beam 4a and is guided for back and forth movement therealong by the guide rails 24 and 26. Carriage 38 is power actuated by a double-acting hydraulic ram 40, the cylinder 42 of which is pivoted by a pin 43 to a bracket 44 fixed to one end of transverse beam 4a. The piston rod 46 of hydraulic ram 40 is attached to a pin 48 which is fixed to carriage 38. Hydraulic ram 40 has a stroke of, for instance, 17 inches. A T-shape guide member 50 is fixed to the inside of carriage 38 opposite pin 48 and is engaged within the C-shape upper guide rail 24 to be guided by the same.

Carriage 38 has a bottom carriage section 52 of L-shape cross-section and fixed thereto by angle brackets 54 and bolts 56. A pair of arms 58 are fixed to and extend rearwardly from bottom carriage section 52. An L-shaped lever arm 60 extends rearwardly from arms 58 and is pivoted thereto at 62 for up and down movement. The upper end of lever arm 60 is pivotally connected at 64 to one end of a double-acting hydraulic ram 66, the other end of which is pivoted at 68 to a stand 70 fixed to and upstanding from carriage 38.

A horizontally disposed rotatable bar 72, of square shape cross-section, is firmly secured to the top of the horizontal portion of L-shape lever arm 60 by means of a retainer bracket 74 and bolt 76.

It will be understood that extension and retraction of the hydraulic ram 66 will cause downward and upward pivoting of L-shape lever arm 60 and, consequently, rotation of the bar 72 about its longitudinal axis with a slight up and down movement of the same.

Rotatable bar 72 extends substantially the whole length of transverse member 4a and is common with the several working implements 16 of the same transverse row. Rotatable bar 72 serves to move the several implements 16 up and down between an inoperative upper position clearing the ground and an operative lower position engaging the ground.

An angle-iron 78 is fixed by bolts 80 to the lower end of carriage 38. Its horizontal flange extends underneath the lower guide rail 26 and its free edge is welded to an inverted angle iron 82, the horizontal flange of which engages within and is guided by the lower guide rail 26. Inverted angle iron 82 extends substantially the whole length of transverse beam 4a and is part of a drag assembly 84 which includes several drag members, one for each implement 16, which are adjustably secured to the common angle iron 82 so as to vary their distance between one another. Each drag member includes an L-shaped plate 86 welded to and upstanding from and across the top edge of a pair of pivot plates 88 which extend transversely of and underneath lower rail 26 and angle iron 82. Plates 88 carry an upstanding shoe 90 adapted to be pressed and locked within a complementary shoe 92 under the action of lock bolts 94 carried by plate 86 and which act on a spacer 93 removably inserted between angle iron 82 and bolts 94 to facilitate removal of the drag member. Complementary shoe 92 is fixed to the vertical flange of inverted angle iron 82 and is co-extensive therewith. The arrangement is such that by releasing bolts 94 the drag member, composed of elements 86, 88, 90 and 93, can be shifted to an adjusted position along inverted angle iron 82 and then locked thereto by the inter-engagement of the shoes 90, 92 by tightening bolts 94.

A swing arm 96, together with its reinforcing brace 98 is fixed to a sleeve 100 which extends between the two pivot plates 88 and is pivoted thereto by a pivot pin 101 inserted in holes 102. Swing arm 96 extends rearwardly and carries implement 16 at its outer end. Implement 16 is a conventional earth working disc.

Disc 16 can be raised and pressed down by an actuating lever 106 which extends above brace 98 and is pivotally connected at 108 to the upper portion of L-shaped plate 86.

Rotatable bar 72 is fixed to the top of each actuating lever 106 of the row of implements by means of a tightening bracket 110 and bolt 112. Thus, bar 72, by its rotation, raises and lowers all the actuating levers 106.

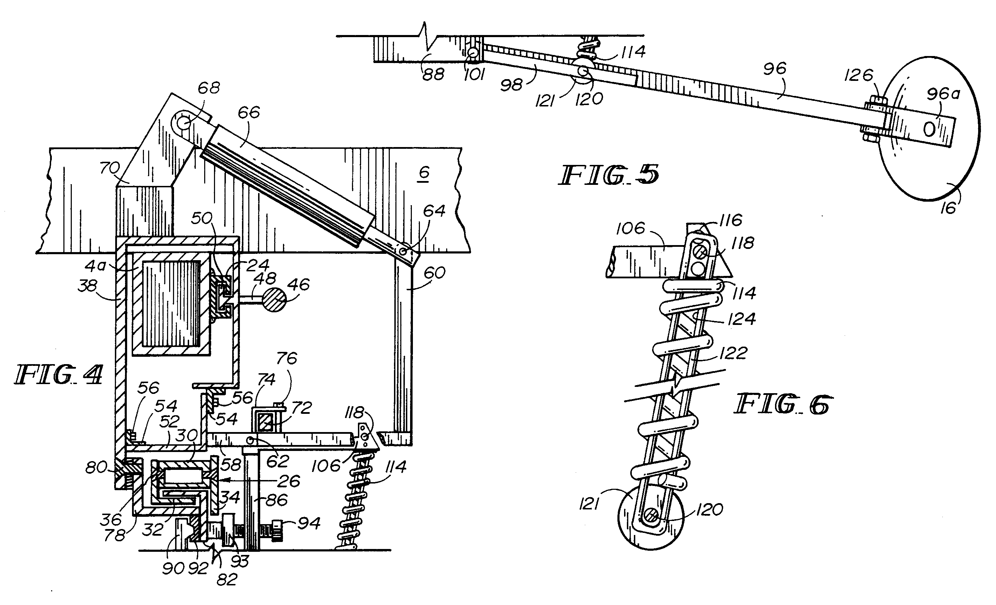

The outer end of the actuating lever 106 is connected by a compression coil spring 114 to the swing arm 96. As shown more particularly in Figure 6, the outer end of the two spaced sections of swing arm 96 is provided with several pairs of holes 116 through a selected pair of which extends a cross pin 118 which abuts the upper end of coil spring 114. The lower end of coil spring 114 abuts against a lower cross pin 120 fixed to swing arm 96. A spring guiding member 122 extends longitudinally within coil spring 114 to prevent lateral bending of the same. Spring guide 122 is in the form of an elongated plate with a longitudinal slot 124 through which the upper cross pin 118 extends. It will be understood that when actuating lever 106 moves down, its upper cross pin 118 is free to ride down through slot 124 to thereby compress coil spring 114 which, in turn, exerts a downward force on the swing arm 96 to elastically bias the disc 16 in engagement with the ground. During compression of spring 114, the spring guide 122 simply extends upwardly between the two parallel sections of the actuating lever 106.

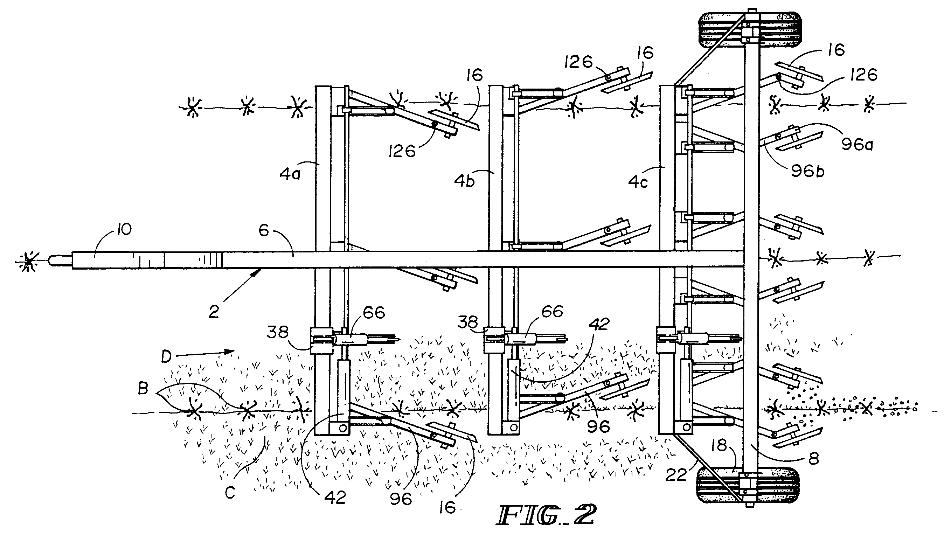

Referring to Figures 2 and 5, each swing arm 96 is preferably made in two sections, with the outer rear section 96a pivoted to the main section 96 through a pivot bolt 126 so as to adjust the orientation of the disc 104 with respect to the main front section of arm 96.

In Figure 2, the rear section 96a of the work implements of the two first rows are aligned with the main section 96 while in the rearmost third row of the work implements, the rear sections make a horizontal angle with the main section.

When the actuating levers 106 are in their down position, the compressor springs 114 press down on the working discs 16. However, these discs are free to move up and down to follow the ground contour. When levers 106 are raised, the discs 16 are also lifted to their inoperative position. The two hydraulic rams 40 and 66 are operated by the hydraulic power system of the farm tractor and are each controlled by hydraulic valves actuated by the control levers 14 accessible at the operator's station 12.

Referring to Figure 2, it is noted that the first row of discs 16 carried by transverse beam 4a are inclined with respect to the direction of movement of the machine so as to remove the weeds on one side of the plants B while the discs of the second row carried by the second beam 4b are inclined in the opposite direction and disposed on the opposite side of the plants B so as to effect weeding on said opposite side. Since the discs 16 of the two rows are independently laterally shiftable under the control of the operator or of a conventional guidance system, their distance to plants B can be independently monitored to closely approach the plants B independently of the size of the plants.

Preferably, the stroke effected by the drag assembly 84 is at least equal to the distance between two adjacent discs 16 of the same row, therefore, these discs can be moved laterally to the extent of half the distance between two adjacent ridges C. In this manner, the discs 16 can be used either for weeding or for ridge refilling purposes. As previously noted, the discs of the two first rows in the position shown in Figure 2 serve to effect mechanical weeding of the ridges on each side of the plants B.

By shifting the discs of the first row to the right of the plants and the discs of the second row to the left of the plants, the discs will be in a position for ridge refilling; however, in the machine, it is preferable to include a third row of working discs 16 carried by the transverse beam 4c. In the third row, discs 16 are arranged in pairs with the discs of each pair inclined in opposite directions so as to effect ridge refilling immediately after the weeding operation effected by the two first rows of discs 16 have been completed.

It will be noted that in the third row of discs, one swing arm 96 of the pair is straight but with the rear section 96a pivoted at pivot pin 126 while the other swing arm 96b is bent so as to provide transversely aligned but oppositely inclined rearwardly converging discs 16 to properly effect ridge refilling.

It follows that in a single pass of the machine, effective weeding and ridge refilling is effected.

The operator, at station 12, can effect continuous lateral shifting of the discs 16 while the machine is being pulled by the tractor so as to precisely position the discs with respect to the plants B in a weeding position very close to the crop plants despite lateral deviations of the plants and ridges with respect to the furrows D in which ride the tire wheels 18. The same is true of the ridge refilling operation effected by the third row of discs 16.

It will be noted that the reaction force produced by the transverse shifting of the discs 16 is resisted by the tire wheels 18.

The inclination of the discs 16 can be horizontally adjusted to remove the desired amount of soil. The discs can also be vertically adjusted on the swing arm 96 in accordance with the size and type of plants in order to prevent cutting the leaves of such plants.

Other types of earth working implements can be carried by the swing arms 96 such as spikes, hoes and the like depending on the type of crop plants.

It will be noted that the provision of the two vertically spaced guide rails 24 and 26 in which ride the carriage 38 and transverse bar 82 form a system which very efficiently resists the torsional torque effected on the drag assembly 84 when the discs 16 are in operation or when they are raised. The two rails also better resist the horizontal torque produced on carriage 38 and bar 82 during lateral shifting of all the implements.

## Claims

1. A row crop agricultural machine for moving in a longitudinal direction comprising a frame (2), ground engaging means (18) depending from and preventing movement of said frame (2) transversely of said longitudinal direction, a transverse row of earth working implements (16) carried by said frame for movement in said longitudinal direction and also transversely displaceable relative to said frame in opposite transverse directions, and actuator means (40) reacting on said frame and acting on said implements to move said row of implements in either one of said transverse directions.

2. An agricultural machine as defined in claim 1, wherein said ground engaging means include ground engaging tire wheels (18) which support said frame (2).

3. An agricultural machine as defined in claim 1, wherein said actuator means is a double acting hydraulic ram (40) and further including an operator station (12) carried by said frame above said earth working implements and hydraulic ram control means (14) at said station.

4. An agricultural machine as defined in claim 1, further including a transverse guide rail (26) fixed to said frame, a transverse bar (82) movably guided by and retained by said rail (26), a series of spaced apart drag members (86, 88) fixed to said transverse bar, each of said implements (16) attached to and rearwardly depending from one of said drag members (86, 88), said actuator means (40) reacting on said frame and acting on said transverse bar.

5. An agricultural machine as defined in claim 4, further including for each implement a longitudinally extending swing arm (96) having a front end pivotally connected to said drag member (86, 88) for up and down pivoting movement of said swing arm (96) and having a rear end carrying said implement, and power operated lifting means (60, 66, 72) to simultaneously raise and lower said implements relative to said frame.

6. An agricultural machine as defined in claim 5, wherein said power operated lifting means (60, 66, 72) include a crank arm (106) for each implement (16) having an inner end pivoted to said drag member (86, 88) and extending over the respective swing arm (96), a link (114) interconnecting the outer end of said crank arm (106) to said swing arm (96), a rotatable bar (72) extending across and secured to each crank arm (106), for rotation of said crank arms (106) in a vertical plane, and a double acting ram (66) to rotate said rotatable bar (72).

7. An agricultural machine as defined in claim 5, further including a crank arm (106) for each implement (16) extending over the respective swing arm (96), having an inner end pivoted to said drag member (86, 88) and a compression spring (114) interconnecting the outer end of said crank arm (106) to said swing arm (96), a rotatable bar (72) extending across and secured to each crank arm (106) and a double-acting ram (66) to rotate said rotatable bar (72) to simultaneously rotate said crank arms (106) in a vertical plane so as to raise or lower said implements (16) relative to said frame (2).

8. An agricultural machine as defined in claim 7, wherein said frame includes a transverse beam (4), said transverse guide rail (26) fixed to said transverse beam below the same, a carriage (38) surrounding said beam and fixed to said transverse bar (82), said actuator means (40) being a double-acting hydraulic ram pivotally connected to said transverse beam (4) and to said carriage (38) and further including an upper guide rail (24) directly secured to said transverse beam (4) extending parallel to and above said first-named transverse guide rail (26) and a guide member (50) secured to said carriage (38) and engaging and guided by said upper guide rail (24).

9. An agricultural machine as defined in claim 8, wherein said drag members (86, 88) are removably and adjustably fixed to said transverse bar (82) so as to adjust the distance between the implements (16) of said transverse row.

10. An agricultural machine as defined in claim 5, wherein said row is a first row, said actuator means (40) is a first actuator means and said power operated lifting means (60, 66, 72) is a first lifting means and further including a second transverse row of earth working implements (16) longitudinally spaced from and parallel to said first row, second actuator means (40) reacting on said frame (2) and acting on said second row of implements (16) to move said second row of implements in opposite directions and second power operated lifting means (60, 66,72) to raise and lower said second row of implements (16) relative to said frame.

11. An agricultural machine as defined in claim 10, wherein the distance between implements (16) of any one row is substantially constant and the stroke of the transverse movement of each row of implements (16) is substantially equal to at least one half said distance.

12. A machine as defined in claim 10 or 11, wherein the working implements (16) of the first and second rows are respectively inclined in opposite directions with respect to said longitudinal direction add further including a trailing, third transverse row of working implements (16) carried by said frame (2) and also transversely displaceable relative to said frame (2) in opposite transverse directions, third actuator means (40) reacting on said frame (2) and acting on said third row of implements to move said third row of implements (16) in opposite transverse directions and third power operated lifting means (60, 66, 72) to simultaneously raise and lower said working implements (16) of said third row relative to said frame (2), the working implements (16) of the third row being arranged in transversely aligned pairs with the working implements (16) of each pair being oppositely inclined with respect to said longitudinal direction.
